# EUROPEAN PATENT APPLICATION

(11) **EP 1 696 307 A2**
(43) Date of publication of application: **30.08.2006**
(21) Application number: 06250928.6
(22) Date of filing: 22.02.2006
(51) Int. Cl.: G06F 3/033, G06F 3/046

(54) **Pointer for interactive display system**

(30) Priority: 25.02.2005 GB 0503931
(71) Applicant: Promethean Technologies Group Ltd., Blackburn Lancashire BB1 5TH (GB)
(72) Inventor: Unsworth, Peter, Patchwork Cottage, Clitheroe Lancashire BB7 3EP (GB)
(74) Representative: Williams, David John

(57) **Abstract**

There is disclosed a pointing device for use with an interactive surface, the pointing device comprising a coil for producing an electromagnetic field which couples into the interactive surface, the pointing device being arranged, in use, to be attached to a finger.

## Description

The invention relates to interactive display systems and more particularly to a pointing device for use with an interactive surface of such a system.

A typical example of an interactive display system is an electronic whiteboard system. An electronic whiteboard system typically is adapted to sense the position of a pointing device or pointer relative to a working surface of the whiteboard, the working surface being an interactive surface. When an image is displayed on the work surface of the whiteboard, and its position calibrated, the pointer can be used in the same way as a computer mouse to manipulate objects on the display by passing the pointer over the surface of the whiteboard.

A typical application of an interactive whiteboard system is in a teaching environment. The use of interactive whiteboards improves teaching productivity and also improves student comprehension. Such whiteboards also allow use to be made of good quality digital teaching materials, and allow data to be manipulated and presented using audio visual technologies.

A typical construction of an electronic whiteboard comprises providing an array or matrix of drive and sense coils behind or underneath the working surface of the whiteboard to thereby form an interactive surface, which coils interact with electromagnetic elements in the pointer device.

An electronic whiteboard system may also be associated with interactive tablets or graphic tablets which may be used by users of the system. Such graphic tablets may be constructed in a similar way - but on a smaller scale - interactive surface, and a user may work on such surface with a pointing device adapted to interact with the interactive surface.

It should also be noted that graphic tablets may be used independently of a whiteboard system. For example they are known to be used as input devices for computer systems, where a graphic tablet may replace a mouse and mat' arrangement.

In current whiteboard system arrangements, and in arrangements of graphic tablets for computer input use, the pointing device is typically provided a pen-style device. It has been typically considered that a pen-style device is natural choice for use with an interactive surface since it mimics the action of pen-on-paper that most users are familiar with.

Typically such a pen may be provided with buttons which function in the same way as the buttons of a computer mouse. In one arrangement, the depression of a button is achieved by pressing the pen in an axial direction toward the interactive surface.

However for some users a pen is not an ideal tool, for example due to poor motor skills or a physical inability to write or use a pen adequately. Often such students are classed either in the "special needs" category or in the primary category, where their motor skills are not yet adequately developed. In many cases the problem associated with young children using the pen is due to the requirement of needing to press the pen tip on the whiteboard surface whilst simultaneously controlling the movement of the pen across the whiteboard surface. These problems have been addressed, in one solution, by the introduction of a "soft touch pen" which requires just the very lightest of pen tip pressure to "write" on the board.

However there are still cases where even such a soft touch pen does not address some problems.

Traditionally the alternative approach is to use resistive touchscreen technology with finger operation to address these problems. Whilst this approach does go some way to addressing the problems of the "special needs" requirements, it does compromise the situation when it comes to the pen users. More often than not because of the nature of the school environment a whiteboard may need to cater for both users which can adequately use a pen pointing device and those who cannot.

It is readily acknowledged that electromagnetic technology, rather than touchscreen technology, provides the best quality of input device. However prior art electromagnetic interactive surface technology has not provided a technical solution for the requirements of those users who cannot fully use a pen style pointer device.

It is an aim of the invention to provide an improved pointing device suitable for use in conjunction with an interactive surface.

It is a further aim of the invention to provide an alternative input device for an electromagnetic whiteboard.

In accordance with the invention there is provided a pointing device for use with an interactive surface, the pointing device comprising a coil for producing an electromagnetic field which couples into the interactive surface, the pointing device being arranged, in use, to be attached to a finger. Thus the movement of the pointing device directly follows the movement of the figure. The movement of the pointing device thus follows a natural motion.

The pointing device preferably includes a receptacle arranged, in use, to be attached to a finger. Such a receptacle preferably allows, in use, for the secure fitting of the pointing device to a finger.

The receptacle is a finger-receiving receptacle, and the coil is attached to said receptacle. Such an arrangement maximises the mimicry of finger movement.

The receptacle is preferably a thimble shaped element. The thimble shaped element may have an open end for protrusion, in use, of a finger tip. The thimble shaped element may have a closed end for contact, in use, with a whiteboard surface. The receptacle may be of a shape other than a thimble, and any shape may allow for protrusion of a finger or a closed end.

The coil may be wound such that the coil provides a receptacle for a finger.

The device may include a contact point for contact with the whiteboard. The contact point may include a finger cover. In use a finger tip of a user may be exposed, for contact with the whiteboard surface.

A further electromagnetic field in the interactive surface may produce an electromagnetic field which couples with the coil.

In accordance with the invention there is provided a pointing device for use with an interactive surface, the pointing device comprising a receptacle for receiving a finger of a user, and a coil of a tuned circuit. The coil may be wound around, or wound adjacent to, the receptacle.

The coil may resonate responsive to an induced voltage or current from the electromagnetic field produced by one or more drive coils of the interactive display. In such arrangement the pointer is preferably a passive device. The coil may produce an electromagnetic field responsive to a drive signal. In such an arrangement the pointer is preferably an active device.

The electromagnetic field produced by the coil may induce a voltage or current by electromagnetic coupling in one or more sense coils of the interactive display.

The invention is described by way of example with reference to the accompanying Figures, in which:
Figure 1 illustrates an example of an interactive display system;
Figure 2(a) illustrates an example of the functional elements of a whiteboard apparatus arrangement of an interactive display system;
Figure 2(b) illustrates an example functional structure of a pointing device for use with the whiteboard apparatus arrangement of Figure 2(a);
Figure 3 illustrates a portion of a grid array of an interactive surface associated with the whiteboard apparatus arrangement of Figure 2(a);
Figure 4 illustrates a pointing device for an interactive surface in accordance with an embodiment of the invention;
Figures 5(a) to 5(d) illustrate a pointing device for an interactive surface in accordance with another embodiment of the invention;
Figures 6(a) to 6(e) illustrate a pointing device for an interactive surface in accordance with a further embodiment of the invention; and
Figures 7(a) and 7(b) illustrate a pointing device for an interactive surface in accordance with a still further embodiment of the invention.

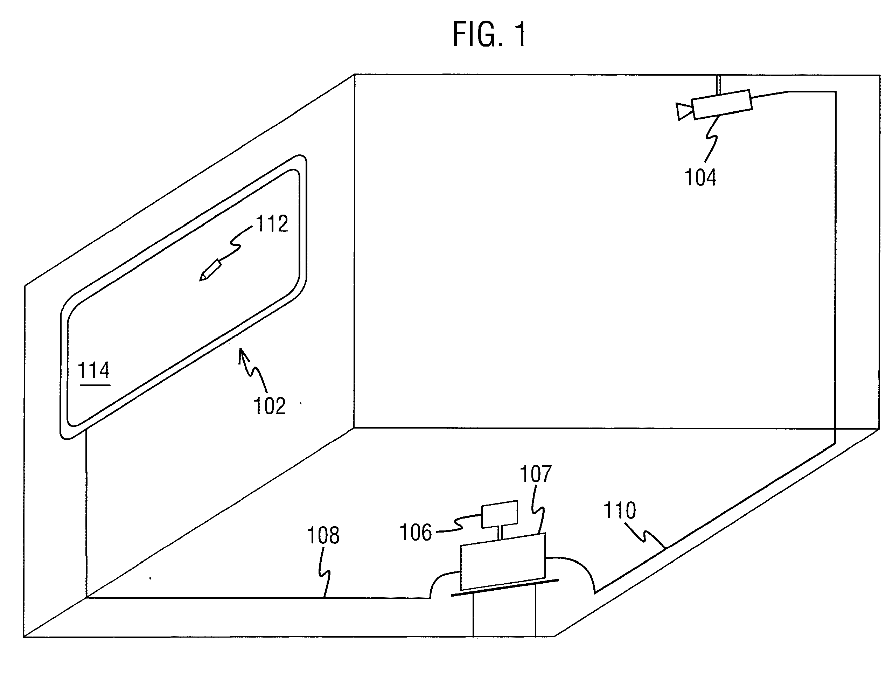

Referring to Figure 1, an exemplary interactive display system comprises a whiteboard assembly arrangement generally designated by reference numeral 102, a computer 107 having an associated display 106, and a projector 104. The computer 107 is connected to the whiteboard assembly arrangement 102 via a communication link 108, and to the projector 104 via a communication link 110. The projector 104, which may be fitted to a ceiling of a room such as a classroom, receives signals from the computer 107 which are translated into corresponding projection images for projection onto a display surface 114 of the whiteboard assembly arrangement 102.

The image projected on the display surface 114 of the whiteboard assembly arrangement 102 may be the same as that displayed on the screen 106 of the computer 107.

The interactive display system also includes one or more pointing devices or pointers, as represented by pointing device 112, which cooperate with the whiteboard assembly arrangement 102. The pointing device 112 is moved across the display surface 114 of the whiteboard assembly arrangement 102, in contact with or close to the surface. The position of the pointing device 112 relative to the display surface 114 of the whiteboard assembly arrangement 102 is, in one type of arrangement, detected electronically by means of a wire grid embedded beneath the display surface 114. The pointing device 112 may be moved around the display surface 114 to write on the display surface, for example, or to highlight images displayed on the display surface. The use of such a pointing device in combination with a whiteboard assembly arrangement is well-known to one familiar with the art.

Using methods known in the art, the pointing device 112 can function in the same way as a computer mouse. The pointer may be provided with buttons or such like which may be depressed, to provide for functional operations in much the same way as buttons may be provided on a computer mouse. For example, by depression of a button a displayed icon over which the pointing device 112 is positioned may be selected. For example, by depression of a button the functional operation of the pointer may change from a pen to an eraser.

In general, the movement of the pointing device 112 across the display surface 114 is detected by the embedded grid array, and such movement translated to be superimposed on the displayed image, such that the displayed image projected by the projector 104 is adapted to display any required action associated with the pointing device, as is known in the art.

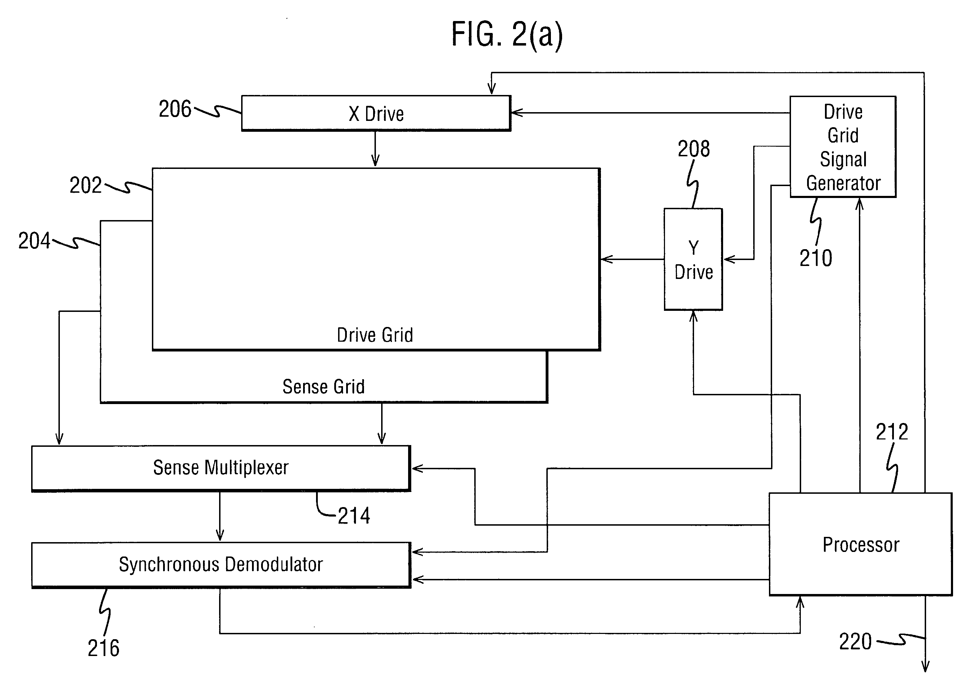

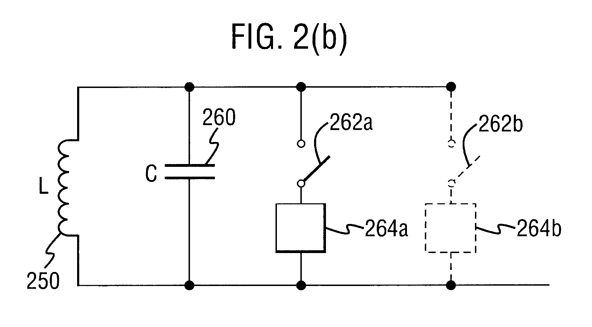

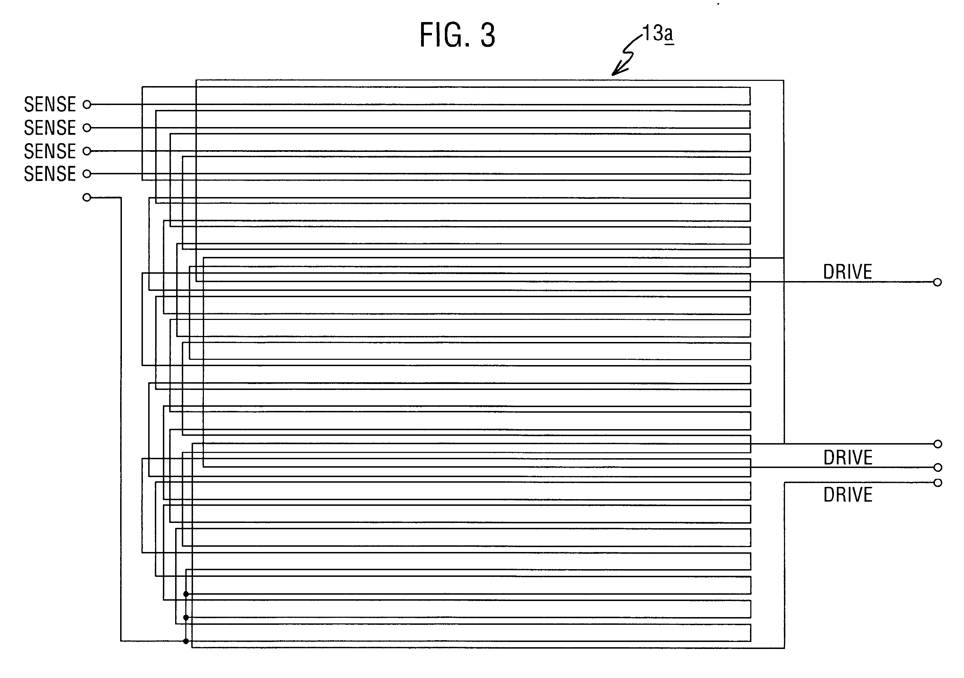

The structure of the whiteboard assembly arrangement and the pointing device for operation of the interactive display system may be one of several different implementations. In a preferred arrangement the whiteboard assembly arrangement 102 includes a grid portion behind the display surface, which comprises two sets of wire loops arranged orthogonally to each other. The pointing device 112 is adapted to induce a current in the wire loops which can be used to determine the position of the pointing device 112. In a particularly preferred arrangement the pointing device 112 is a passive electromagnetic device: a drive grid induces a current in the pointing device, which in turn induces a current in a sense grid. The operation of such an arrangement is discussed further below with reference to Figure 3 in combination with Figure 2(a). Electronic control circuitry is preferably provided within the whiteboard assembly arrangement 102 for processing signals generated by cooperation of the wire grid beneath the display surface and the pointing device, and to thus determine the position of the pointing device and information corresponding to any provided buttons on the pointing device being selected.

With reference to Figure 2(a), there is shown an exemplary overview of the functional elements of a preferred whiteboard assembly arrangement, which may be provided by control circuitry associated with whiteboard assembly arrangement 102.

The exemplary whiteboard assembly arrangement 102 includes a drive grid 202 and a sense grid 204. The drive grid 202 consists of a first plurality of conducting coils arranged in a first orientation and a second plurality of conducting coils arranged in a second orientation, the second orientation being orthogonal to the first orientation. One set of coils, hereinafter referred to as the X drive coils, provides a set of X-axis drive coils, and the other set of coils, hereinafter referred to as the Y drive coils, provides a set of Y-axis drive coils. The sense grid 204 consists of a first plurality of conducting coils arranged in a first orientation and a second plurality of conducting coils arranged in a second orientation, the second orientation being orthogonal to the first orientation. One set of coils, hereinafter referred to as the X sense coils, thus provides a set of X-axis sense coils, and the other set of coils, hereinafter referred to as the Y sense coils, provides a set of Y-axis sense coils.

The sense grid 204 comprises a balanced array or matrix of conducting coils laid side by side, each coil being paired with an identical but oppositely wound coil, the coils being inter-connected so as to give a multi-phase output signal. The pattern of inter-connection is repeated many times over the area of the whiteboard, with each complete pattern being referred to commonly as a "pitch".

The sense grid 204 has two separate and independent such arrays of coils, which are placed orthogonal to each other to permit position sensing in perpendicular X and Y axes. The pattern of coils is preferably produced by wiring of a conductive material.

The drive grid 202 is also formed as two orthogonal arrays or matrices, for driving in perpendicular X and Y axes, and may be fabricated by the same techniques as is the sense grid. The drive grid comprises individual coils laid side-by-side which coils are nominally of a pitch or smaller in width.

The drive grid is connected to receive drive signals from both an X-axis drive multiplexer 206 and a Y-axis drive multiplexer 208. The X-axis and Y-axis drive multiplexers 206 and 208 provide excitation current to ones of the X and Y drive coils respectively. The drive signals are substantially sinusoidal, and are preferably generated by a programmable signal source which is locked to a stable reference frequency.

A drive grid signal generator 210 generates drive signals to each of the X-axis and Y-axis drive multiplexers 206 and 208.

The operation of the X-axis and Y-axis drive multiplexers is controlled by a processor 212, which provides a control signal to each of the X-axis and Y-axis drive multiplexers and the drive grid signal generator.

The drive grid signal generator 210 is preferably coupled to a power amplifier which boosts the available current for the drive signals. The drive grid signal generator 210 also provides clock signals as an output thereof to demodulation circuitry.

The pointing device 112 is, in a preferred embodiment, a device containing a tuned circuit. When the drive multiplexers drive an alternating current into the X or Y drive coils of the drive grid, the associated changing magnetic field induces a voltage signal in the tuned circuit of the pointing device. The resultant current induced in the pointer then causes a magnetic field which induces a voltage signal in the X and Y sense coils of the sense grid.

An example of the functional elements of a prior art pointer is described in more detail with reference to Figure 2(b). Figure 2(b) shows schematically a circuit of a pointer for use in combination with the whiteboard apparatus arrangement of Figure 2(a). The pointer comprises an LC tuned circuit including a coil 250 and a capacitor 260. In parallel with the tuned circuit are one or more switched resistors. In Figure 2(b) there is shown a first series combination of switch 262a and resistor 264a in parallel with the tuned circuit, and a second series combination of switch 262b and resistor 264b. In the prior art when the pointer is in the form of a stylus or pen, the resistors may be switched either axially by depressing the stylus tip against the work surface, or radially using buttons located on the side of the pen.

In use, an alternating magnetic field at a frequency f₁ caused by the excitation current in a coil of the drive grid acts on the tuned circuit of the pointer, the resonant frequency of which is set to approximately f₁. This causes the tuned circuit to resonate, and the magnetic field produced by the coil 250 induces a voltage signal into the sense grid.

In general, the drive grid produces an electromagnetic field which couples into the coil of the tuned circuit. This electromagnetic field may induce a current or voltage in the coil of the tuned circuit. The coil of the tuned circuit produces an electromagnetic field which couples into the sense grid. This electromagnetic field may induce a current or voltage in the sense grid.

The resistors may be switched into the circuit so as to alter the Q-factor of the LC tuned circuit.

A sense multiplexer 214 is connected to receive output signals from the sense grid 204. Current induced in ones of the X and Y sense coils is detected at the sense multiplexer.

The sense multiplexer 214 provides an output which is connected to an input of a synchronous demodulator 216. After the sensed voltage signals are received by the sense multiplexer 214 they are thus de-modulated in the synchronous demodulator. The purpose of the synchronous demodulator is to reject any extraneous noise and unwanted background signals. The demodulation clock for the synchronous demodulator is derived from the drive grid signal generator 210. The demodulation clock circuitry provides both phase and quadrature data to be discerned from the sensed signals.

The digital signals produced at the output of the synchronous demodulator 216 are then output to the processor. The processor preferably processes such signals to calculate the position of the pointer. The calculated position information is then further output, via an output interface 220, to a host device such as computer 106 of Figure 1.

The processor 212 generates control signals on outputs to each of the drive grid signal generator 210, the sense multiplexer 214, the synchronous demodulator 216, and each of the X and Y drive multiplexers 206 and 208.

The operation of the whiteboard assembly arrangement 102 and the pointing device 112 are now described in more detail.

The X and Y drive coils are superimposed to the whiteboard assembly arrangement 102 display surface 114. The drive coils of the drive grid can be selected individually and, if required, in a random fashion by the drive multiplexers under the control of the processor. When driving the X drive grid, the Y sense grid is connected to the synchronous demodulator via the sense multiplexer. Conversely when driving the Y drive grid, the X sense matrix is connected to the synchronous demodulator via the sense multiplexer.

The balanced array of each of the X sense coils and Y sense coils is such as to produce a nominal null in the sensed signal when the respective orthogonal drive coil is excited and no pointing device is present. This is due to the fact that any signal induced in one of the clockwise sense coils directly by the orthogonal drive coil will be induced in an equal and opposite sense in the corresponding counter clockwise sense coil. However when the pointer which is excited by a drive coil at its resonant frequency is placed in proximity to a sense coil it retransmits magnetic field which induces a voltage signal in the sense coils according to its position relative to the sense coils.

Figure 3 shows an arrangement of a Y portion of the sense grid and a Y portion of the drive grid in an exemplary embodiment. The sense grid, for the purposes of illustration in this embodiment, is of a four-phase nonoverlapping type. The technique of operation is suited to many types of commonly used grid or matrix topologies and is particularly suited to topologies in which sense coils are arranged so that there is nominally a null sense voltage when no pointer is present, as discussed above.

The Y sense grid has an interconnected pattern which repeats several times across the display surface, each repeat being commonly referred to as a pitch. The number of pitches needed in any arrangement is dependent upon the width of each pitch and the size of the display surface. The sense grid permits the processor to determine with high resolution the position of the pointer within the pitch. This is achieved as follows.

Four phase signals from the sense coil are amplified and demodulated by the synchronous demodulator to generate DC voltage levels. The DC voltage levels are proportional to the amplitude of the AC signal which is being demodulated from the sense coils. The DC voltage levels are then converted into digital values by an analogue to digital converter (not shown) and are sent to the processor. The processor undertakes a vector summation on the four numbers (representing the four differently phased coils) and from this the exact position of the pointing device with respect to the four coils, i.e. within a particular pitch, is determined.

However the signal from the sense matrix alone cannot determine the absolute position of the pointer, since the processor cannot know from this information alone in which pitch the pointer is inducing the signals.

In order to determine the pitch in which the signals from the pointing device are induced, it is necessary to excite selectively the appropriate drive coils. The number of drive coils is equal to or greater than the number of pitches. For example to determine the pitch in the X axis the processor selectively energises the X drive coils and determines the peak amplitude and phase of the signals induced in the Y sense coils for each selected X drive coil. From this amplitude and phase information the X pitch is determined.

Conversely by selecting the Y drive coils and analysing the X sense coils the Y pitch is determined.

There has thus been described the functional structure and operation of an interactive display system including a whiteboard assembly apparatus.

As described in the foregoing discussion, in a typical prior art arrangement a pen-style device is used as a pointer or pointing device for interacting with the interactive surface of the whiteboard surface.

In accordance with the invention, there is provided an improved an arrangement in which the pointing device is provided such that it may be attached to the finger of a user rather than held between the fingers of users.

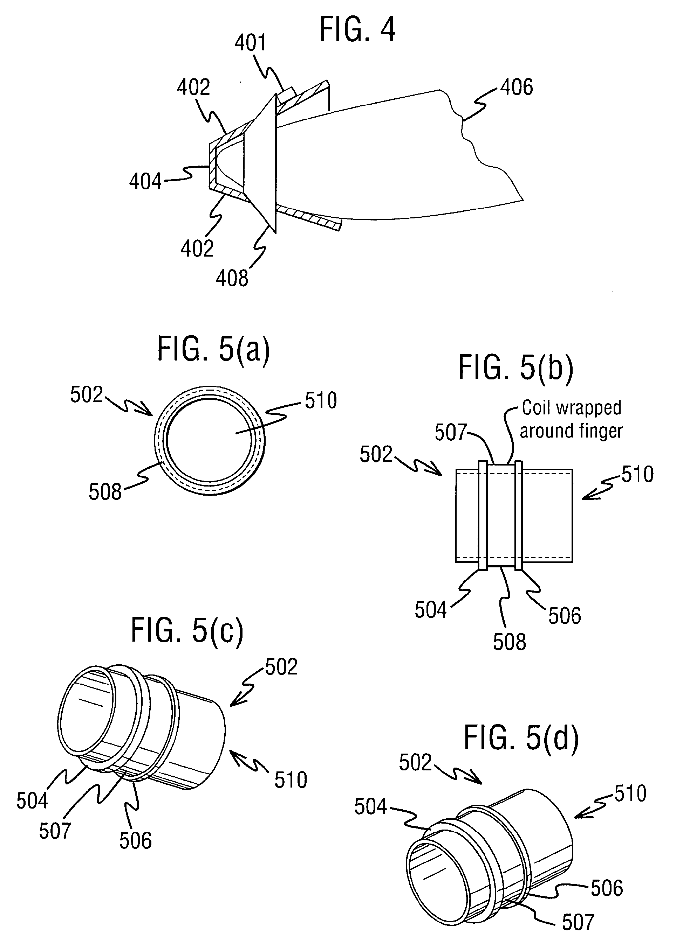

Referring to Figure 4, there is shown a general arrangement of a pointer or pointing device for use with an interactive whiteboard and embodying the principles of the present invention.

As can be seen there is generally provided a receptacle 402 formed of a coil. The coil forms a receptacle by being cylindrically shaped such that it is suitable for receiving a finger of a user.

The cylindrical shape of the coil 402 is preferably conical, tapering toward an end at which there is provide a surface 404 which acts as a cap for the cylinder. The surface 404 may be provided as a continuation of the coil 402, or may be a separate element simply providing a closure for the coil. The other end of the cylinder-forming coil provides an opening to receive a finger 406.

As is further shown in Figure 4 the cylindrical coil is further provided with a cylindrical collar 408 around the outside of such. The inner surface of the collar 408 engages with an outer surface of coil 402. The collar provides physical robustness to the structure.

As is further shown in Figure 4, mounted adjacent the coil 402 there is provided a capacitor 401. The capacitor 401 and the coil 402 are electrically connected to each other to form the LC tuned circuit, as described hereinabove, for operation of the pointer in combination with an interactive surface.

The dimensions of the receptacle provided by the coil 402 may vary. There may be provided different dimensioned receptacles for use by different users, for example for adult users and children users. The shape of the receptacle may vary. A conical shape is preferable to ensure secure engagement with a user's finger in use. The angle of the cone may be varied. The inner surface of the receptacle may be provided with a resilient means, such as a rubber coating, to improve engagement of the receptacle with a user's finger. In general, the receptacle provided for a user's finger may be considered to be of a thimble shape.

It should be noted that in Figure 4 it is proposed that the coil itself provide the receptacle. In practice the coil is preferably wound around a dedicated receptacle, which may be made, for example, of a plastics material. Thus a plastic `thimble' may be provided, with a coil wound around the outer surface thereof.

As shown in Figure 4, the surface 404 at the end of the receptacle at which the user's finger tip rests may be provided. The surface 404 may then, in use, engages with a work surface of an interactive surface.

In an alternative embodiment the receptacle is not provide with a surface 404 at an end thereof, but rather the user's finger is allowed to protrude through the end thereof. The user's finger tip may then engage with the work surface of the interactive surface directly. This provides for a more tactile arrangement than a closed surface receptacle arrangement. In such a way the operation of the system has all the advantages associated with a touch sensitive display.

In the arrangement of Figure 4 there is shown a receptacle for a finger to which is wound around the surface thereof a coil, such that the coil is effectively wound around the finger. In an alternative arrangement, the wound coil may be provided adjacent a finger, for example by mounting the wound coil on a surface of a finger receptacle.

In embodiments, especially those in which the wound coil is provided adjacent to the receptacle, the receptacle need not be cylindrical. The receptacle is provided for securely engaging with a user's finger, and any suitable design may be used.

The invention thus provides a pointing device in which the functionality is packaged in a form so as to be able to be attached, in use, to a finger, preferably either by the finger being positioned within the drive coil or at the side of the drive coil.

The arrangement shown in Figure 4 is a simplified arrangement in which there is provided a fixed frequency tuned circuit. In such an arrangement a status signal may be generated when a signal level detected from the coil 402 in a sense coil of the interactive surface is above a preset signal threshold. This signal may then be interpreted as, for example, a left mouse click.

This detection relative to a threshold may be achieved by measuring the amplitude of the individual sense coil signals. A composite signal may then be calculated by performing a vector summation of the individual measured signals at the sense coils. If the composite signal and/or any one of the individual measured signals is above a predetermined threshold value, then this may be taken as a representation of a button depression, for example it may simulate the depression of the left button on a computer mouse. If the summed signal and/or all the individual signals are below the threshold level, this is assumed to simulate the absence of a button depression.

Thus the strength of the sensed signal(s) relative to the threshold is used as an indication of a button depression. This technique may be used to detect a button depression since the strength of the sensed signal may be used as an indication of the proximity of the coil in the pointing device to the display working surface. Thus an increase in strength of a received signal, detected relative to a threshold, is interpreted as movement of the pointer toward the display working surface. Movement of the pointer toward the display working surface is interpreted as simulating depression of a button on a computer mouse, e.g. selecting a function or highlighting a displayed icon to which the pointer is pointing.

The threshold may be a fixed preset threshold level, or may be a dynamically set threshold level. For example, for a dynamic threshold, the threshold may be set based upon whether the coil is moving towards the surface or away from it. In this particular case the threshold levels may be the same or different. The threshold may also vary dynamically due to such factors such as speed of movement of the coil towards the surface or the speed of movement across the surface.

In alternative embodiments the device may be of a form such that it incorporates buttons which signify, for example, left and right mouse clicks. A possible implementation of such an arrangement is described herein below with reference to an embodiment.

When a finger is brought towards a work surface of an interactive display, it can thus select various software functions in the same way that a prior art pointing device may do so. For example a pen and then a line could be drawn with a finger; or an object could be selected and moved, and then by lifting the finger off it could be "dropped".

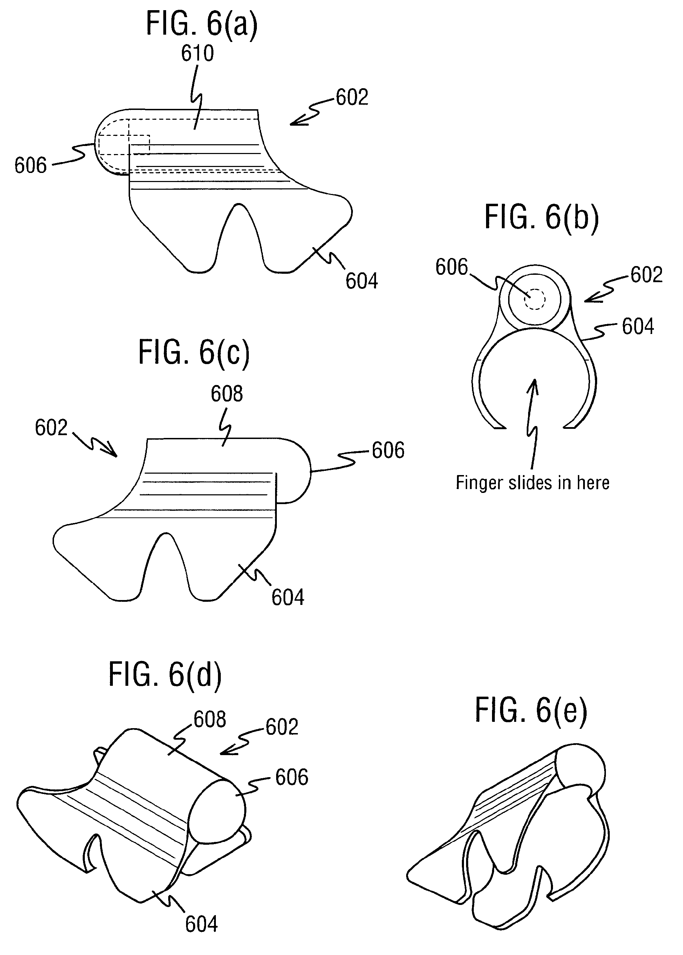

Two further alternative arrangements of pointing devices are now described with reference to Figure 5 and 6.

Referring to Figures 5(a) to 5(d) there is illustrated an example arrangement in which a straight cylindrical receptacle 502 is provided. The cylindrical receptacle is provided with two parallel protrusions 504 and 506 disposed around the circumference of the receptacle 502. A portion 507 of the outer surface of the cylindrical receptacle 502 between the protrusions 504 and 506 is radially extended, such that there is provided a cavity 508 within the cylinder surface for housing a coil. The hollow centre of the cylinder, 510, provides for the sliding entry of a user's finger.

Referring to Figures 6(a) to 6(e) there is illustrated an arrangement, generally designated by reference numeral 602, in which a coil is provided adjacent a receptacle for a finger.

A partial cylindrical structure 604 is provided for engagement with a user's finger. The cylindrical structure is partial insofar as there is an axial opening in the surface of the cylinder. Such an arrangement may provide for a convenient and secure engagement with a user's finger.

Integrally formed with the cylindrical receptacle 604 is a pen-shaped portion 608. The pen-shaped portion 608 is mounted adjacent the receptacle portion 604. The pen-shaped portion 608 is provided with a cavity 610 within which there is provided the coil and capacitor of the tuned circuit (not shown). The pen-shaped portion 608 is provided with a protruding tip 606 at an end thereof which corresponds to a surface for engagement with the work surface of the interactive display.

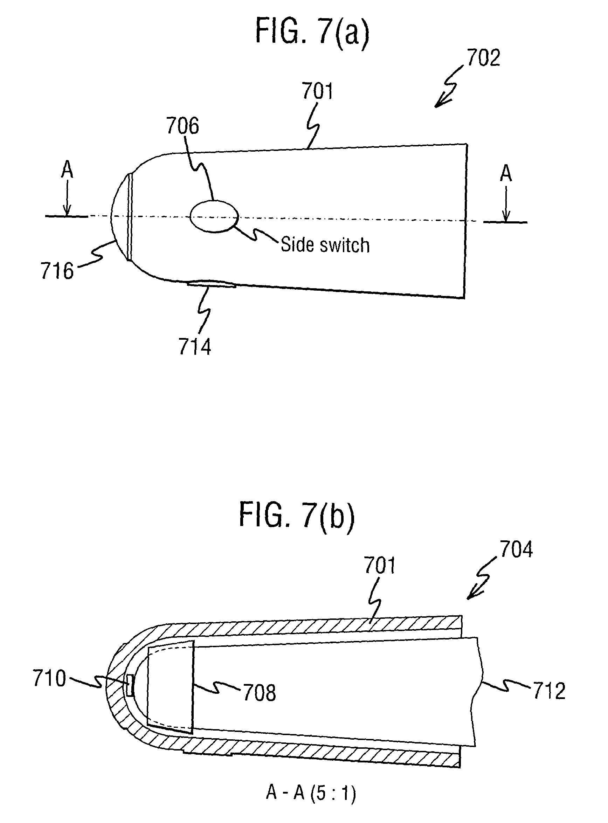

Referring to Figures 7(a) and 7(b) there is illustrated an arrangement, generally designated by reference numeral 702, in which a pointer constructed in accordance with the principles of the invention is provided buttons. In the arrangement of Figure 7 the coil is wound around a finger receptacle, and consequently around a user's finger. However the additional features described in relation to Figure 7 are not limited to such an arrangement, and may be used with any arrangement of the coil.

Referring to Figure 7 a thimble-like structure generally designated by reference numeral 702 is illustrated. The structure includes a receptacle 701 for a user's finger. In this embodiment the receptacle is of a conical shape, having a closed end portion at the end where the finger tip is received. The receptacle may, however, be of any suitable arrangement, such as any arrangement described elsewhere in this document. In Figure 7(b) there is shown an outline of a user's finger 712 in the receptacle 701.

As can be seen in Figure 7(b), in the described arrangement generally disposed within the receptacle 701 is a wound coil 708, which provided the inductor of the LC tuned circuit as described hereinabove. As can be seen in Figure 7(b) the finger 712 passes through a the wound coil 708 forming a coil, and abuts a switch 710. When the user places their finger, and hence the receptacle 701, against the working surface, and then pushes toward such surface, the switch 710 is activated. Thus in this way a switch is provided. The further circuitry associated with the switch is not shown in Figure 7.

Referring to Figure 7(a) it can be seen that the 'finger tip' portion 716 of the receptacle may be formed separate to the main body of the receptacle, such that it may move relative to the main body. In this way when the finger tip portion 716 is pressed against the working surface of the display it may be pushed toward the body of the receptacle 701, thereby closing a switch or closing a circuit between the finger tip portion and the body, to indicate a button depression.

Thus a switch may be activated by axial movement of the receptacle either by the finger within the receptacle depressing a switch by pressing toward the working surface of the display, or by a moving part of the receptacle moving axially relative to the receptacle body on pressing toward the working surface of the display to close a switch. Such a switch may be a membrane type or a mechanical type.

As also shown in Figure 7(b), the receptacle body may be provided with one or more push button switches, such as switches 706 and 714. These buttons may be depressed radially, and are associated with switches included within the receptacle 701 (not shown) . Such switches may be activated by, for example, a thumb of a hand, with the receptacle being mounted on the index finger.

Whilst the invention and the various embodiments thereof is ideally suited to passive electromagnetic positioning technology as described herein, it may also be used with active pointer device. With suitable miniature batteries and power conserving technology the invention may be advantageously applied to "active pen" electromagnetic technologies.

It should be noted that although the description herein is presented in the context of an interactive display system incorporating a whiteboard assembly arrangement, the invention is not limited to such. The invention generally applies to interactive input/output devices, which may include, for example, graphics tablets such as may be used in interactive display systems. The invention may generally be used with any type of interactive display adapted to interact with a pointing device.

## Claims

1. A pointing device for use with an interactive surface, the pointing device comprising a coil for producing an electromagnetic field which couples into the interactive surface, the pointing device being arranged, in use, to be attached to a finger.

2. A pointing device according to claim 1 including a receptacle arranged, in use, to be attached to a finger.

3. A pointing device according to claim 2 wherein the receptacle is a finger-receiving receptacle, and the coil is attached to said receptacle.

4. A pointer according to any preceding claim wherein the receptacle is a thimble shaped element.

5. A pointer according to claim 4 wherein the thimble shaped element has an open end for protrusion, in use, of a finger tip.

6. A pointer according to claim 4 wherein the thimble shaped element has a closed end for contact, in use, with a whiteboard surface.

7. A pointing device according to any preceding claim wherein the coil is wound such that the coil provides a receptacle for a finger.

8. A pointing device according to any preceding claim wherein the device includes a contact point for contact with the whiteboard.

9. A pointing device according to claim 8 wherein the contact point includes a finger cover.

10. A pointing device according to any preceding claim wherein in use a finger tip of a user is exposed, for contact with the whiteboard surface.

11. A pointing device according to any one of claims 2 to 10 wherein the pointer is provided with a coil around the receptacle.

12. A pointing device according to any one of claims 2 to 10 wherein the pointer has a coil attached to the receptacle.

13. A pointing device according to any preceding claim wherein the pointer has a coil adjacent receptacle.

14. A pointing device according to any preceding claim wherein the pointer has buttons disposed on a housing thereof.

15. A pointing device according to any preceding claim wherein the coil is a drive coil.

16. A pointing device according to any preceding claim wherein the coil forms an inductor of a tuned circuit.

17. A pointing device according to any preceding claim wherein an electromagnetic field produced in the interactive surface couples into the coil.

18. A pointing device according to claim 17 wherein the electromagnetic field coupled into the coil induces a voltage or current in the coil.

19. A pointing device according to any preceding claim further comprising one or more buttons thereon.

20. A pointing device according to claim 19 wherein at least one button is mounted on the side of the pointer and depressed by a radial force.

21. A pointing device according to claim 19 or claim 20 wherein at least one button is mounted on the tip of the pointer and depressed by an axial force.

22. A pointing device for use with an interactive surface, the pointing device comprising a receptacle for receiving a finger of a user, and a coil of a tuned circuit.

23. A pointing device according to claim 22 wherein the coil is wound around, or wound adjacent to, the receptacle.

24. A pointing device according any preceding claim wherein the coil resonates responsive to an induced voltage or current from the electromagnetic field produced by one or more drive coils of the interactive display.

25. A pointing device according to claim 24 wherein the pointer is a passive device.

26. A pointing device according any preceding claim wherein the coil resonates responsive to a drive signal.

27. A pointing device according to claim 26 wherein the pointer is an active device.

28. A pointing device according to any preceding claim wherein the electromagnetic field produced by the coil induces a voltage or current in one or more sense coils of the interactive display.

29. A pointing device as described herein, or as shown in any one of Figures 4 to 7.
